# EUROPÄISCHE PATENTSCHRIFT

(11) **EP 0 638 449 B1**
(45) Veröffentlichungstag und Bekanntmachung des Hinweises auf die Patenterteilung: **16.10.1996**
(21) Anmeldenummer: 94111526.3
(22) Anmeldetag: 23.07.1994
(51) Int. Cl.: B60J 3/02

(54) **Gegenlagerböckchen für Fahrzeugsonnenblenden**
Counter bearing support for a vehicle sun visor
Contre-support pour pare-soleil de véhicule

(30) Priorität: 09.08.1993 DE 4326661
(43) Veröffentlichungstag der Anmeldung: 15.02.1995
(73) Patentinhaber: GEBR. HAPPICH GmbH, D-42285 Wuppertal (DE)
(72) Erfinder: Viertel, Lothar, D-66802 Altforweiler (DE); Welter, Patrick, F-57730 La Chambre (FR)

(56) Entgegenhaltungen:
- EP-B- 0 005 146
- DE-A- 3 536 471
- DE-C- 2 803 731
- DE-C- 3 523 135
- DE-C- 4 028 939

## Beschreibung

Die Erfindung bezieht sich auf ein Gegenlagerböckchen für Fahrzeugsonnenblenden, welches als Kunststoff-Spritzgußteil ausgeführt ist und einen im Querschnitt unrunden, in der Einbaulage einen Karosseriedurchbruch durchgreifenden Befestigungszapfen sowie zwei angeformte, die Gegenlagerachse einer Sonnenblende klammerartig umgreifende Arme aufweist, deren einander zugewandten Seiten eine hinterschnittene Lageröffnung für die Gegenlagerachse und einen deren wiederholtes Einstecken in die Lageröffnung ermöglichenden Einführschlitz bilden.

Gegenlagerböckchen der angegebenen Art werden üblicherweise (vgl. DE 28 03 731 C2) an einer Karosseriewand angeschraubt. Dabei müssen die Böckchen, um die Schraublöcher zu finden, sehr sorgfältig positioniert werden, was als langwierig und lästig empfunden wird. Von besonderem Nachteil bei der herkömmlichen Befestigungsart ist aber der durch die erforderliche Schraubarbeit bedingte beträchtliche Montageaufwand mit den daraus resultierenden Kosten. Als unschön und eine Verletzungsgefahr begründend, werden zudem die Durchstecköffnungen für die Befestigungselemente angesehen, zumal die Randkanten der Durchstecköffnungen zumeist relativ scharfkantig ausgeführt sind. Um diesem zu begegnen, ist es erforderlich, die Durchstecköffnungen gemäß der Lehre der EP- 0 005 146 B1 jeweils mittels eines ihrem Öffnungsquerschnitt angepaßten, über ein Filmscharnier an dem Gegenlagerböckchen angeformten Deckel zu verschließen, was aber den Montageaufwand noch erhöht.

Der Erfindung liegt hiernach die Aufgabe zugrunde, ein Gegenlagerböckchen der eingangs genannten Art zu schaffen, das sich bei vergleichweise einfacher und kostengünstiger Herstellbarkeit schnell und einfach montieren läßt.

Ausgehend von dieser Aufgabenstellung wird bei einem Gegenlagerböckchen der eingangs erwähnten Art vorgeschlagen, daß erfindungsgemäß der Befestigungszapfen am freien Endbereich zwei einandergegenüberliegend über Filmscharniere verschwenkbar angeformte Winkelhebel aufweist, deren erste Schenkel über das freie Zapfenende hinweg in Zapfenrichtung und deren zweite Schenkel hierzu quer verlaufen, daß die Winkelhebel durch Einstecken des Befestigungszapfens in den Karosseriedurchbruch um 90° verschwenkbar sind, um mit den ersten Schenkeln das Karosserieblech zu hintergreifen und mit den zweiten Schenkeln am Befestigungszapfen zur Anlage zu kommen und daß die Winkelhebel in dieser Lage durch eine über den Befestigungszapfen schiebbare Abdeckkappe, die mit in Rastausnehmungen der zweiten Schenkel eingreifenden Rastnasen ausgebildet ist, verriegelbar sind.

Durch diese erfindungsgemäßen Maßnahmen läßt sich das Gegenlagerböckchen an einem Karosserieblech einfach dadurch befestigen, daß der Befestigungszapfen in die Karosserieöffnung eingeführt und anschließend die Abdeckkappe über die Arme hinweg auf den Befestigungszapfen aufgeschoben wird.

Um beim Aufstecken der Abdeckkappe das Gegenlagerböckchen nicht festhalten zu müssen und um ein Überdrücken des Gegenlagerböckchens auszuschließen, kann gemäß einer Ausführungsform der Erfindung vorgesehen sein, daß am Befestigungszapfen den Einsteckweg begrenzende Anschlagnocken angeformt sind. Damit kann der Befestigungszapfen nur soweit in die Karosserieöffnung eingeführt werden, bis die Anschlagnocken in Anlageberührung mit dem Karosserieblech gelangen.

Mit Vorteil kann weiterhin vorgesehen sein, daß auch die Abdeckkappe als Kunststoff-Spritzgußteil ausgebildet ist und die Rastnasen daran einstückig angeformt sind. Dabei können die Rastnasen sich an Stegen befinden, die am Kappenboden angeformt und mit Auflaufschrägen zum Übergreifen der zweiten Schenkel ausgebildet sind. Diese Maßnahmen ermöglichen eine einfache, besonders kostengünstige Fertigung und vereinfachen zudem die Montage.

Ein Ausführungsbeispiel der Erfindung wird im folgenden anhand der Zeichnung näher erläutert. Es zeigen:
- Fig. 1: das Gegenlagerböckchen mit Abdeckkappe in einer perspektivischen Explosivdarstellung
- Fig. 2: das Gegenlagerböckchen nach Fig. 1 in der ersten Stufe des Montageablauf und
- Fig. 3: das Gegenlagerböckchen nebst Abdeckkappe fertig an einem Karosserieblech montiert.

Das Gegenlagerböckchen weist einen zweiteiligen Aufbau auf und besteht aus einem Grundkörper 1 aus Kunststoff und der damit verbindbaren Abdeckkappe 2 aus Kunststoff. Der obere Teil des Grundkörpers 1 ist als in einen Karosseriedurchbruch 3 einführbarer Befestigungszapfen 4 ausgebildet, während der untere Teil des Grundkörpers 1 zwei eine nicht gezeigte Gegenlagerachse einer Sonnenblende klammerartig umgreifende Arme 5 und 6 aufweist deren einander zugewandten Seiten eine hinterschnittene Lageröffnung 7 für die Gegenlagerachse und einen Einführschlitz bilden.

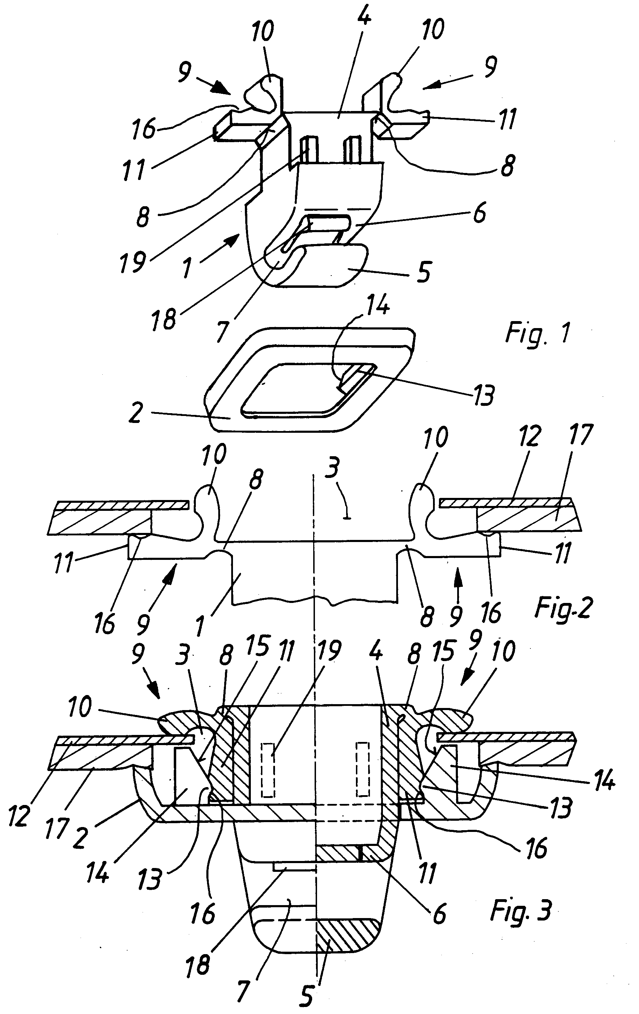

Der Befestigungszapfen 4, der ebenso wie der Karosseriedurchbruch 3 unrund, wie quadratisch oder rechteckig ausgebildet ist, weist am freien Endbereich zwei einandergegenüberliegend über Filmscharniere 8 verschwenkbar angeformte Winkelhebel 9 auf. Die jeweils ersten Schenkel 10 der Winkelhebel 9 verlaufen über das freie Zapfenende hinweg in Zapfenrichtung, während die zweiten Schenkel 11 hierzu jeweils quer verlaufen (vgl. Fig. 1 und 2). Die Schenkel 10 und 11 der Winkelhebel 9 sind in einem Winkel von 90° zueinander angeordnet und in der Ausgangsstellung mit dem Befestigungszapfen 4, wie in Fig. 1 und 2 gezeigt, verbunden.

Zum Anbringen des Grundkörpers 1 an ein Karosserieblech 12 wird derselbe mit den ersten Schenkeln 10 der Winkelhebel 9 voran an den Karosseriedurchbruch 3 herangeführt und in diesen eingeführt (vgl. Fig. 2), wobei die zweiten Schenkel 11 am Rand des Durchbruchs 3 gegen das Karosserieblech 12 gelangen und verschwenkt werden, so daß die Winkelhebel 9 in die in Fig. 3 dargestellte Stellung gelangen und mit ihren ersten Schenkeln 10 das Karosserieblech 12 hintergreifen. Die zweiten Schenkel 11 der Winkelhebel 9 befinden sich dann in Parallelanlage am Befestigungszapfen 4. Ein Überdrücken wird durch den Einsteckweg begrenzende Anschlagnocken 19, die am Befestigungszapfen 4 angeformt sind, verhindert.

Zur Sicherung des Grundkörpers 1 und zur Vervollständigung des Gegenlagerböckchens ist nun die Abdeckkappe von der Armseite des Grundkörpers 1 her auf den Befestigungszapfen 4 aufzuschieben. Die Abdeckkappe 2 weist angeformte Rastnasen 13 auf, die sich an Stegen 14 befinden, welche senkrecht aufrecht stehend am Kappenboden angeformt und mit Auflaufschrägen 15 zum Übergreifen der zweiten Schenkel 11 ausgebildet sind. Beim Aufschieben der Abdeckkappe 2 gleiten die Auflaufschrägen 15 der Stege 14 über die freien Enden der zweiten Schenkel 11 und zwingen diese in Anlage an den Befestigungszapfen 4. Die Montage ist abgeschlossen, sobald die Rastnasen 13 in die in den zweiten Schenkeln 11 der Winkelhebel 9 ausgebildeten Rastausnehmungen 16 eingefallen sind, denn dann sind Grundkörper 1 und Abdeckkappe 2 fest miteinander verriegelt.

Im Bedarfsfalle ist auch eine Demontage möglich, indem mit einem Schraubenzieher od. dgl. Werkzeug zwischen Himmel 17 und Anlagerand der Abdeckkappe 2 eingegriffen und die Abdeckkappe 2 abgehebelt wird.

Die Abdeckkappe 2 ist schalenförmig ausgebildet und weist im Schalenboden eine der Querschnittsfläche des Grundkörpers 1 entsprechende Öffnung auf. Der freie Rand der Abdeckkappe 2 liegt in angepreßter Anordnung am Himmel 17 an, und zwar unabhängig davon, ob es sich um einen Formhimmel oder Spannhimmel handelt.

Der Arm 6 des Grundkörpers 1 kann entsprechend der Lehre der DE 28 03 731 C2 zumindest eine federelastisch in Richtung zur Anlageebene verschwenkbare Federzunge 18 aufweisen, damit das Gegenlagerböckchen den technischen Anforderungen in jeder Beziehung genügt.

## Patentansprüche

1. Gegenlagerböckchen für Fahrzeugsonnenblenden, welches als Kunststoff-Spritzgußteil ausgeführt ist und einen im Querschnitt unrunden, in der Einbaulage einen Karosseriedurchbruch (3) durchgreifenden Befestigungszapfen (4) sowie zwei angeformte, die Gegenlagerachse einer Sonnenblende klammerartig umgreifende Arme (5, 6) aufweist, deren einander zugewandten Seiten eine hinterschnittene Lageröffnung (7) für die Gegenlagerachse und einen deren wiederholtes Einstecken in die Lageröffnung (7) ermöglichenden Einführschlitz bilden, dadurch gekennzeichnet, daß der Befestigungszapfen (4) am freien Endbereich zwei einander gegenüberliegend über Filmscharniere (8) verschwenkbar angeformte Winkelhebel (9) aufweist, deren erste Schenkel (10) über das freie Zapfenende hinweg in Zapfenrichtung und deren zweite Schenkel (11) hierzu quer verlaufen, daß die Winkelhebel (9) durch Einstecken des Befestigungszapfens (4) in den Karosseriedurchbruch (3) um 90° verschwenkbar sind, um mit den ersten Schenkeln (10) das Karosserieblech (12) zu hintergreifen und mit den zweiten Schenkeln (11) am Befestigungszapfen (4) zur Anlage zu kommen und daß die Winkelhebel (9) in dieser Lage durch eine über den Befestigungszapfen (4) schiebbare Abdeckkappe (2), die mit in Rastausnehmungen (16) der zweiten Schenkel (11) eingreifenden Rastnasen (13) ausgebildet ist, verriegelbar sind.

2. Gegenlagerböckchen nach Anspruch 1, dadurch gekennzeichnet, daß am Befestigungszapfen (4) den Einsteckweg begrenzende Anschlagnocken (19) angeformt sind.

3. Gegenlagerböckchen nach Anspruch 1 oder 2, dadurch gekennzeichnet, daß auch die Abdecklappe (2) als Kunststoff-Spritzgußteil ausgebildet ist und die Rastnasen (13) daran einstückig angeformt sind.

4. Gegenlagerböckchen nach wenigstens einem der Ansprüche 1 bis 3, dadurch gekennzeichnet, daß die Rastnasen (13) sich an Stegen (14) befinden, die am Kappenboden angeformt und mit Auflaufschrägen (15) zum Übergreifen der zweiten Schenkel (11) ausgebildet sind.

## Claims

1. Counter-bearing support for vehicle sun visors, which support is configured as a plastic injection moulding and has a fastening peg (4), which is not round in cross-section and, in the installed position, engages through a through-passage (3) in the bodywork, as well as two integrally formed-on arms (5, 6) which engage around the counter-bearing pin of a sun visor in a clamp-like manner and whose mutually facing sides form an undercut bearing opening (7) for the counter-bearing pin and an introduction slit which makes it possible for said pin to be plugged repeatedly into the bearing opening (7), characterized in that, on the free end region, the fastening peg (4) has two angle levers (9) which are integrally formed on opposite one another such that they can be pivoted via film hinges (8) and of which the first legs (10) run beyond the free peg end in the direction of said peg and the second legs (11) run transversely thereto, in that, by virtue of the fastening peg (4) being plugged into the through-passage (3) of the body-work, the angle levers (9) can be pivoted through 90° in order to engage behind the sheet metal (12) of the bodywork by means of the first legs (10) and to butt against the fastening peg by means of the second legs (11), and in that, in this position, the angle levers (9) can be locked by a covering cap (2) which can be pushed over the fastening peg (4) and is designed with latching lugs (13) engaging into latching recesses (16) of the second legs (11).

2. Counter-bearing support according to Claim 1, characterized in that stop protuberances (19) which delimit the plug-in path are integrally formed on the fastening pin (4).

3. Counter-bearing support according to Claim 1 or 2, characterized in that the covering cap (2) is also designed as a plastic injection moulding, and the latching lugs (13) are integrally formed thereon.

4. Counter-bearing support according to at least one of Claims 1 to 3, characterized in that the latching lugs (13) are located on webs (14) which are integrally formed on the cap base and are designed with run-on ramps (15) for engaging over the second legs (11).

## Revendications

1. Contre-support pour pare-soleil de véhicule, qui est réalisé sous la forme d'un élément en matière plastique moulé par injection et comporte un tenon de fixation (4), de section non ronde, traversant en position montée un ajour (3) de la carrosserie, ainsi que deux bras (5, 6) venus de moulage, entourant à la manière d'une agrafe l'axe de contre-appui d'un pare-soleil, dont les côtés tournés l'un vers l'autre forment une ouverture d'appui (7) détalonnée pour l'axe de contre-appui et une fente d'introduction permettant son insertion renouvelée dans l'ouverture d'appui (7), caractérisé en ce que le tenon de fixation (4) présente, dans la zone d'extrémité libre, deux leviers coudés (9) venus de moulage, opposés l'un à l'autre, pouvant pivoter par des charnières en film (8), dont la première branche (10) s'étend au-delà de l'extrémité libre du tenon dans la direction du tenon et dont la deuxième branche (11) s'étend transversalement à celle-ci, en ce que les leviers coudés (9) peuvent pivoter de 90° par insertion du tenon de fixation (4) dans l'ajour (3) de la carrosserie, pour passer derrière la tôle de carrosserie (12), avec la première branche (10) et pour venir s'appliquer contre le tenon de fixation (4), avec la deuxième branche (11) et en ce que dans cette position, les leviers coudés (9) peuvent être verrouillés par un capuchon de fermeture (2), à pousser sur le tenon de fixation (4), qui est formé avec des ergots d'arrêt (13), s'engageant dans des évidements d'arrêt (16) de la deuxième branche (11).

2. Contre-support selon la revendication 1, caractérisé en ce que des cames de butée (19), limitant la distance d'insertion, sont formées sur le tenon de fixation (4).

3. Contre-support selon la revendication 1 ou 2, caractérisé en ce que le capuchon de couverture (2) est un élément en matière plastique moulé par injection et les ergots d'arrêt (13) sont formés sur celui-ci d'un seul tenant.

4. Contre-support selon l'une au moins des revendications 1 à 3, caractérisé en ce que les ergots d'arrêt (13) se trouvent sur des cloisons (14), qui sont formées sur le fond du capuchon et qui présentent des parties obliques de montée (15) destinées à passer sur la deuxième branche (11).
